# EUROPÄISCHE PATENTSCHRIFT

(11) **EP 1 468 972 B1**
(45) Veröffentlichungstag und Bekanntmachung des Hinweises auf die Patenterteilung: **08.02.2006**
(21) Anmeldenummer: 04004988.4
(22) Anmeldetag: 03.03.2004
(51) Int. Cl.: C03C 3/066, C03C 3/068, C03C 3/093, C03C 3/091, C03C 3/095

(54) **Boroaluminosilikatglas**
Boroaluminasilicateglass
Verre boroaluminosilicaté

(30) Priorität: 12.03.2003 DE 10311802
(43) Veröffentlichungstag der Anmeldung: 20.10.2004
(73) Patentinhaber: Schott AG, 55122 Mainz (DE)
(72) Erfinder: Wolff, Silke, 42499 Hückeswagen (DE); Wölfel, Ute, 55130 Mainz (DE); Kolberg, Uwe, 55130 Mainz (DE); Kasprzik, Holger, 55124 Mainz (DE)
(74) Vertreter: Gahlert, Stefan

(56) Entgegenhaltungen:
- US-A- 4 106 946

## Beschreibung

Die Erfindung betrifft ein Boroaluminosilikatglas für optische Anwendungen, das insbesondere vorteilhaft als Faserkernglas verwendbar ist.

Herkömmliche optische Gläser, die einen Brechungsindex im Bereich zwischen 1,54 und 1,62 aufweisen (Doppelschwerkron- und Bariumleichtflint-Bereich) enthalten in der Regel PbO, um die erwünschten optischen Eigenschaften (Brechwert von 1,54 ≤ n_{d} ≤ 1,62 und Abbewert von 48 ≤ ν_{d} ≤ 57) bei guter Transmission zu erreichen. Derartige Gläser sind für zahlreiche optische Anwendungen von Interesse, bspw. für die Applikationsbereiche Abbildung, Projektion, Telekommunikation, optische Nachrichtentechnik und Lasertechnologie, insbesondere aber auch für Faseranwendungen (Bild- und/oder Lichtleiter). Durch ihren Bleigehalt sind derartige Gläser wenig chemisch beständig. Als Läutermittel werden zudem häufig As₂O₃ verwendet. Da in den letzten Jahren die Glaskomponente PbO und häufig auch As₂O₃ als umweltbedenklich angesehen werden, tendieren die meisten Hersteller optischer Instrumente und Produkte dazu, bevorzugte blei- und gerne auch arsenfreie Gläser einzusetzen. Zur Verwendung in Produkten hoher Vergütungsstufen gewinnen zudem Materialien mit erhöhten chemischen Beständigkeiten (um die Vergütungsprozesse unbeschadet zu durchlaufen), bei gleichbleibend hohen Transmissionen (sehr geringer Dämpfung), stetig an Bedeutung.

Als bleifreier Ersatz für klassische optische Gläser sind Gläser mit großen Mengen an TiO₂ in silikatischer Matrix bekannt, was zu äußerst kristallisationsinstabilen, schwer schmelzbaren und extrem schwer bearbeitbaren Gläsern führt. Zusätzlich sinkt die Transmission (steigt die Dämpfung) der Gläser durch die intrinsische Adsorption des TiO₂.

Ferner wird in jüngster Zeit aus Verarbeitungsgründen vielfach die Entwicklung von sogenannten "kurzen" Gläsern gefordert, also nach Gläsern, die ihre Viskosität extrem stark mit der Temperatur variieren. Dieses Verhalten hat bei der Verarbeitung den Vorteil, dass die Heißformgebungszeiten, also die Formschlusszeiten gesenkt werden können. Dadurch wird zum einen der Durchsatz erhöht, zum anderen wird so das Formenmaterial geschont, was sich äußerst positiv auf die gesamten Produktionskosten niederschlägt. Auch können durch die so ermöglichte schnellere Auskühlung (kürzere Formschlusszeiten) sogar Gläser mit stärkerer Kristallisationsneigung verarbeitet werden als bei entsprechenden längeren Gläsern, und eine Vorkeimung, die in nachfolgenden Sekundärheißformgebungsschritten (Faserzug, Ionenaustausch, Nachverpressen, Umsenken, Feinkühlen etc.) problematisch sein könnte, wird vermieden.

Für Mikrostrukturierungszwecke (Gradientenindexlinsen, (planare, stabförmige, faser(Bündel)-artige) Wellenleiter, Kugellinsen etc.) mittels Ionenaustausch (z.B. Na-Ag), sollten die neuen Materialien zudem unter wirtschaftlichen Bedingungen in Standardprozessen ionenaustauschbar sein. Ein Zusatzmerkmal kann zudem die spannungsaufbauende Ionenaustauschbarkeit (z.B. Na-K, "Vorspannbarkeit") sein.

Universell einsetzbare optische Materialien sollten heute ebenfalls in Faserapplikationen, z.B. als Faserkernglas, eingesetzt werden können. Zu diesem Zweck müssen neue Typen besonders tolerant gegenüber Sekundärheißformgebungsschritten (Faserzug, Verschmelzen usw.) sein, und eine gute Verträglichkeit mit konventionellen Fasermantelgläsern aufweisen.

Im Allgemeinen ist eine Glasfaser zur Lichtübertragung aus einem hoch brechenden Kernglas und einem, dieses Kernglas umgebenden, Mantelglas mit niedrigerer Brechzahl als der des Kernglases aufgebaut. Unter entsprechend günstigen Bedingungen können Stufenfasern, umfassend ein Kernglas und ein das Kernglas vollständig an seiner Umfangswand umschließendes Mantelglas hergestellt werden. Ein lichtübertragender Glaskörper in Faserform, bei dem über den Querschnitt des Kernglases die Brechzahl konstant ist, nennt man Stufenfaser. Glasfasern dieses Typs übertragen Licht, das an einem Ende der Faser in den Kern eingekoppelt wird, an das andere Ende der Faser, wobei das Licht an der Grenzfläche zwischen Kernglas und Mantelglas vollständig reflektiert wird (Totalreflexion).

Die Lichtmenge, die in eine solche Faser eingekoppelt und übertragen werden kann, ist proportional dem Quadrat der numerischen Apertur (NA) der Faser und der Querschnittsfläche des Faserkerns. Um möglichst große Lichtmengen über große bis mittlere Entfernungen (≤ 100 Meter) zu übertragen, werden solche Stufenfasern häufig zu dichten Faserbündeln zusammengepackt, mit einem Schutzschlauch versehen, ihre Enden in Metallhülsen eingeklebt und die Stirnseiten durch Schleifen und Polieren zu optisch planen Flächen bearbeitet. Entsprechend konfektionierte optische Faserbündel nennt man faseroptische Lichtleiter. Wird ein Produktionsprozess angewandt, der eine geometrische Sortierung der einzelnen Fasern zulässt, können auf demselben Weg Bildleiter hergestellt werden.

Je höher die NA der das Bündel enthaltenden Einzelfasern ist, desto größere Lichtmengen können diese Lichtleiter übertragen.

Faseroptische Lichtleiter finden in den unterschiedlichsten technischen und medizinischen Bereichen Anwendung (allgemeine Industrietechnik, Beleuchtungs-, Verkehrstechnik, Automobilindustrie, Architektur, Endoskopie, Dentalmedizin). Ihre wichtigste Funktion ist die Übertragung eines möglichst großen Lichtstroms von einem Ort A zu einem anderen Ort B, meist über kurze bis mittlere Entfernungen (einige wenige bis maximal 100 Meter). Dabei wird häufig das von einer leistungsstarken Lichtquelle ausgehende Licht, z.B. das einer Halogen- oder Entladungslampe, mittels optischer Hilfsmittel, wie einer Linse, oder einem Reflektor, in das Faserbündel eingekoppelt.

Die durch faseroptische Lichtleiter übertragene Lichtmenge hängt neben der NA ihrer Fasern auch von den Transmissionseigenschaften der sie enthaltenden Kerngläser ab. Nur Kerngläser ganz bestimmter spezifischer Zusammensetzungen mit sehr niedrigen Verunreinigungsgraden der Rohstoffe, aus denen sie geschmolzen werden, leiten das Licht möglicht dämpfungsarm über die gesamte Lichtleiterlänge. Die Rohstoffe zum Erschmelzen solcher Kerngläser sind aufgrund ihrer hohen Reinheit recht teuer, was zu erheblichen Herstellkosten solcher Fasern bzw. daraus hergestellter Lichtleiter führen kann.

Neben der Lichtmenge, die ein faseroptischer Lichtleiter überträgt, spielt häufig eine farbsticharme Übertragung des Lichtes durch ihn eine bedeutende Rolle. Aufgrund der spektralen Transmissionsabhängigkeit des Kernglases, das die Fasern enthalten, erfolgt eine mehr oder weniger starke Farbverschiebung des Farbwertes der eingekoppelten Lichtquelle, was sich meist in einem Gelbstich des aus dem Lichtleiter austretenden Lichtes bemerkbar macht. Dies wirkt sich überall dort störend aus, wo es auf farbneutrale Wiedergabe ankommt (z.B. in der medizinischen Endoskopie bei fotografischer Bilddokumentation zur Differenzierung von z.B. gesundem und malignem Gewebe u.s.w.). Die Herstellung optischer Stufenfasern aus Mehrkomponentengläsern erfolgt entweder über das sogenannte Doppeltiegel- oder das Stab-Rohr-Verfahren. In beiden Fällen werden Kern- und Mantelglas auf Temperaturen erhitzt, die einem Viskositätsbereich zwischen 10⁴ bis 10³ dPas entsprechen und dabei zu einer Faser ausgezogen. Damit eine stabile Faser niedriger Dämpfung hergestellt werden kann, müssen Kern- und Mantelglas in einer Reihe von Eigenschaften, wie etwa Viskositätsverlauf, thermische Ausdehnung, Kristallisationsneigung etc., kompatibel zueinander sein. Insbesondere darf es in der Grenzfläche zwischen Faserkern und -mantel nicht zu einer Kontaktreaktion bzw. einer Kristallisation kommen, was eine Totalreflexion des im Faserkern geführten Lichtes empfindlich stören und damit die Faser für die Anwendung zur dämpfungsarmen Lichtübertragung untauglich machen würde. Darüber hinaus würde auch die mechanische Festigkeit der Faser durch Kristallisation negativ beeinträchtigt.

Aus der US 5 744 409 ist ein optisches Borosilikatglas für Präzisionspresslinge bekannt, das ein auf hohe Boratgehalte (bis maximal 30 Gew.-%) ausgelegtes Material ist. Ferner enthält das Glas einen hohen Anteil von Lithiumoxid (7 bis 12 Gew.-%).

Der hohe Boranteil führt zu einer Verlängerung der Viskosität, was nachteilig für die Verarbeitung ist. Außerdem werden die chemische Beständigkeit und durch höhere Komponentenmobilität die Kristallisationsstabilität und die Ionenaustauscheigenschaften nachteilig beeinflusst. Der hohe Lithiumgehalt in Kombination mit dem hohen Boratgehalt führt zu einem verstärkten Korrosionsangriff gegenüber dem Schmelzwannenmaterial, was zu höheren Produktionskosten führt. Sofern in Platin geschmolzen wird, wird der Platin-Eintrag erhöht und so die Transmissivität verschlechtert (inakzeptabel schlechte Dämpfungswerte). Wird in Feuerfestgestein oder Quarzgut geschmolzen, so verringert sich durch den Materialeintrag die Kristallisationsstabilität (innere Vorkeimung).

Aus der DD 283 281 A3 ist ein Cer-freies, strahlenresistentes, UV-durchlässiges optisches Filterglas bekannt, das Germanat und/oder Zinnoxid und/oder Antimonoxid als obligatorische Komponenten enthält. Diese dienen hier der Stabilisierung gegen Strahlungsschäden im Langzeitgebrauch des Materials. Die Schutzwirkung basiert somit auf einer Maskierung der die Schädigung initiierenden UV-Absorptionslinie, wofür tatsächlich nur äußerst geringe Mengen, eben Dotierstoffmengen der relevanten Stoffe, ausreichend sind. Genau mit diesen Eigenschaften sind die genannten Gläser jedoch nicht mehr für die eingangs genannten Applikationsfelder anwendbar, insbesondere nicht als faseroptisches Material, das eine besonders geringe Dämpfung über den gesamten Spektralbereich besitzen muss.

Aus der JP 88 008 056 ist säurefestes, hydrolytisch beständiges, optisches und ophthalmisches Glas bekannt, das besonders hohe Anteile von Netzwerkbildnern in einem bestimmten Verhältnis aufweist, so dass ein hoch borhaltiges Borosilikatglas mit optionalen Anteilen von Al₂O₃ entsteht. Das hier offenbarte Material kann so bis zu 18 Gew. -% B₂O₃ enthalten. Ein derartig hoher Boratanteil ist als nachteilig anzusehen, da sich hieraus eine starke Verlängerung der Viskosität ergibt. Außerdem leidet die chemische Beständigkeit und durch höhere Komponentenmobilität die Kristallisationsstabilität sowie die Ionenaustauscheigenschaften. Verschlechternd kommt hinzu, dass neben einem sehr hohen Anteil an CaO (7 bis 30 Gew.-%) eine obligatorische Summenzugabe von TiO₂ + Nb₂O₅ von 10 bis 21 Gew.-% hinzukommt. Ein derartig hoher Anteil an CaO (Netzwerkwandler) führt zu einer starken Aufweitung des stabilisierenden Netzwerkes und somit zu starken Kristallisationstendenzen und geringer chemischer Resistenz der Gläser. Auch besteht eine große Gefahr der Bildung von Diffusionssperrschichten in der Startphase eines potenziellen Ionenaustauschs, wodurch ein wirtschaftlich und applikatorisch sinnvoller Austausch verhindert wird. Die Summenzugabe von TiO₂ + Nb₂O₅ führt zu einem extrem starken Transmissionsabfall an der blauen Spektralkante, da beide Komponenten starke Eigenabsorptionen besitzen. Zudem senken sie durch ihre keimbildenden Eigenschaften die Kristallisationsstabilität des Materials stark ab.

Aus der US 3 365 315 ist ein Verfahren zur Herstellung von Hohlglasteilchen mit definierter Dichte bekannt. Das verwendete Glas besitzt einen sehr hohen Anteil von SiO₂ (60 bis 80 Gew.-%). An Alkalioxiden und Erdalkalioxiden werden hierbei nur so geringe Anteile zugesetzt, dass sich hiermit kein ausreichend kurzes Glas erzielen lässt.

Die JP 85 221 338 A (Patent Abstracts of Japan 60 221 338 A) offenbart ein optisches Oxyhalogenid-haltiges Glas mit einem Brechungsindex im Bereich von 1,62 bis 1,85. Hierbei sind zur Einstellung der optischen Lage obligatorische Anteile von mindestens 1 Gew.-% La₂O₃ und von mindestens 0,1 Gew.-% Y₂O₃ vorhanden. Dadurch werden die Dämpfungseigenschaften des Materials durch intrinsische Absorption verschlechtert und zudem das Glas verteuert.

Aus der EP 0 265 983 B1 ist ein lumineszierendes Quarzglas bekannt, das nur einen geringen Anteil (0 bis 0,15 Mol pro Mol SiO₂ an Al₂O₃, B₂O₃, P₂O₅, ZrO₂, SC₂O₃, Y₂O₃, La₂O₃, Gd₂O₃, Lu₂O₃, ZnO aufweist. Zusätzlich enthält das Glas Tb₂O₃ und/oder Ce₂O₃ als Aktivator für eine Lumineszenz.

Mit einem derartig hohen SiO₂-Anteil und nur geringen Zusätzen an Flussmitteln bzw. Netzwerkwandlern lässt sich das angestrebte Viskositätsprofil nicht einstellen. Auch sind die zugesetzten Aktivatoren nachteilig für die angestrebte Verwendung, insbesondere für Faseranwendungen.

Aus der EP 0 399 577 A1 ist ferner ein hochenergiestrahlensensitives Glas bekannt, das gegenüber Aktinidenstrahlung resistent ist. Das Glas enthält jedoch Silber-Ionen sowie Fotosensitivitätsinhibitoren, was den bevorzugten Anwendungsbereichen, insbesondere Faseranwendungen, entgegensteht.

Zur Herstellung von Stufenfasern sind im Stand der Technik grundsätzlich drei unterschiedliche Fasersysteme bekannt.

Das wohl bekannteste und am weitesten verbreitete Fasersystem besteht aus einem hoch bleihaltigen Kernglas (meist 35 Gew.-% PbO) und einem Alkaliborosilikatglas als Mantelglas. Sein Vorteil liegt in der erreichbaren hohen numerischen Apertur (bis zu mehr als 0,7 bei PbO-Anteilen des Kernglases von > 50 %) bei niedrigen Herstellkosten und einer guten Ziehbarkeit zu Fasern ohne Kristallisationsprobleme. Demgegenüber stehen Nachteile wie mittlere bis schlechte Dämpfung (200 bis 300 dB/km) sowie vergleichsweise starker Farbstich, hauptsächlich bedingt durch Pb-Eigenabsorption (Blaukante des sichtbaren Spektrums) sowie eingeschleppte Verunreinigungen an stark färbenden Elementen, wie Chrom und Nickel, gegenüber. Zudem ist Blei als umweltbelastender Stoff mehr und mehr in Verruf geraten und kommt daher für Fasern in spezifischen Anwendungsfällen nur noch mit Einschränkungen oder gar nicht mehr zum Einsatz.

Ein zweites Fasersystem besteht aus einem Alkaliborosilikatglas, das sowohl als Kern- als auch als Mantelglas zum Einsatz kommt.

Im Stand der Technik sind verschiedene solcher Glassysteme beschrieben, z.B. in der EP 0 018 110 B1 oder der EP 0 081 928 B1, der DE 29 40 451 A1 oder der US 4 264 131. Diese Gläser enthalten teilweise neben einem hohen Boranteil auch hohe Anteile an Erdalkali und/oder Zirkon- und Germaniumoxid, um die gewünschte hohe Brechzahl zu erreichen. Ihr Vorteil liegt in der außerordentlich niedrigen Dämpfung (z.T. bei 10 dB/km) und sehr niedrigem Farbstich bei gleichzeitig meist umweltfreundlichen Rohstoffen. Ein Nachteil dieser Gläser besteht in der meist geringeren numerischen Apertur der Fasern, sowie in einer geringeren chemischen Beständigkeit. Auch ist der obligatorische Boroxidanteil (US 4 264 131, EP 0 081 928 B1, DE 29 40 451 A) nachteilig für die Feuerfestbeständigkeit. Wegen der schlechteren chemischen Beständigkeit müssen die Fasern direkt bei ihrer Herstellung, unmittelbar nach dem Ziehen z.B. aus der Düse am Doppeltiegel, online mit einem Kunststoffmantel als Schutz gegen möglichen chemischen und/oder mechanischen Angriff versehen werden. Darüber hinaus wird die niedrige Dämpfung durch die Verwendung hochreiner und damit sehr teurer Rohstoffe erkauft. Beide letztgenannten Aspekte, hohe Herstellkosten und obligatorischer Kunststoffmantel, machen damit die Verwendung als Bündelfaser für breitere Anwendungen praktisch unmöglich. Vielmehr finden sie als Einzelfaser zur Daten- oder Energieübertragung (Laserfaser) in einer Vielzahl spezieller Applikationen Verwendung.

Auch Fasern auf reiner SiO₂-Basis, als drittes Fasersystem, kommen prinzipiell als Bündelfaser zur Lichtübertragung in Frage. Ihren Vorzügen einer extrem niedrigen Dämpfung (bis 6 dB/km), sehr guter Farbneutralität und guter Umweltverträglichkeit, stehen als gravierendster Nachteil die hohen Kosten gegenüber. Reines Kieselglasmaterial ist aufgrund der hohen Verarbeitungstemperatur extrem teuer. Hinzu kommt ein aufwendiger Dotierungsprozess der sogenannten Preform, bei dem durch Einbau von Fluor in die Oberfläche eines zylindrischen Stabes die notwendige Brechzahlerniedrigung des reinen Quarzes erzielt wird, die als optische Isolation zur Lichtübertragung in der späteren Faser notwendig ist. Zudem ist die erreichbare numerische Apertur von Quarzfasern recht begrenzt (0,22).

Der vorliegenden Erfindung liegt daher die Aufgabe zugrunde, ein optisches Glas anzugeben, das einen Brechungsindex im Bereich zwischen 1,54 und 1,62 und einen Abbewert zwischen 48 und 57 ermöglicht und gleichzeitig eine verbesserte chemische Beständigkeit aufweist. Dabei soll ferner eine möglichst geringe Dämpfung erreicht werden und eine gute Toleranz gegenüber Sekundärheißformgebungsschritten ermöglicht sein. Das Glas soll insbesondere auch als Faserkernglas verwendbar sein und mit üblichen faseroptischen Mantelgläsern kompatibel verarbeitbar sein.

Ferner soll eine optische Stufenfaser angegeben werden, die unter Verwendung eines derartigen Glases herstellbar ist.

Diese Aufgabe wird erfindungsgemäß gelöst durch ein Glas, das zumindest folgende Bestandteile (in Gew.-%) aufweist:

| | |
|---|---|
| SiO₂ | 35 bis 50 |
| B₂O₃ | 0,1 bis 6 |
| Al₂O₃ | 0,1 bis 7 |
| P₂O₅ | 0,1 bis 4 |
| R₂O | 4 bis 24 |
| RO | 0 bis 12 |
| BaO | 6 bis 14,5 |
| ZnO | 14 bis 25 |
| La₂O₃ | 0 bis 5 |
| ZrO₂ | 0 bis 10, |

wobei R₂O ein Alkalioxid ist, RO ein Erdalkalioxid außer BaO ist, wobei der Anteil von Li₂O maximal 6 Gew.-% beträgt, wobei das Glas außer zufälligen Verunreinigungen kein GeO₂, SnO, SnO₂, Sb₂O₃ oder AgO und vorzugsweise keine seltenen Erden enthält, und wobei das Glas ggf. unter Zusatz von Läutermitteln in üblichen Mengen von vorzugsweise bis zu 1 Gew.-% erschmolzen ist.

Die erfindungsgemäßen Gläser sind als optische Gläser für zahlreiche Applikationsbereiche, wie für die Abbildung, Projektion, Telekommunikation, optische Nachrichtentechnik und/oder Lasertechnologie einsetzbar, besonders auch für Faseranwendungen (Bild- und/oder Lichtleiter) mit einem Brechwert von 1,54 ≤ n_{d} ≤ 1,62, einem Abbewert von 48 ≤ ν_{d} ≤ 57 und sehr guter Transmission (geringer Dämpfung). Die erfindungsgemäßen Gläser sind gut zu schmelzen und zu verarbeiten und weisen eine gute chemische Beständigkeit auf. Des weiteren weisen die erfindungsgemäßen Gläser gute Ionenaustauscheigenschaften und ausreichende Kristallisationsstabilität auf, die eine Primär-Fertigung und sekundäre Heißformgebungsschritte (Faserzug, Ionenaustausch, Umsenken, Feinkühlen, Nachverpressen) in kontinuierlich geführten Aggregaten möglich machen. Die erfindungsgemäßen Gläser besitzen eine günstige Kristallisationsstabilität und ein kurzes Viskositätstemperaturprofil, wodurch die thermische Behandlung (Faserzug, Ionenaustausch, Umsenken, Feinkühlen, Nachverpressen) der Gläser ohne Weiteres ermöglicht wird.

Die erfindungsgemäßen. Gläser zeichnen sich durch eine gute Umweltverträglichkeit aus, da diese kein Blei enthalten und recht kostengünstig herstellbar sind, da auf den Zusatz von teuren Komponenten verzichtet wird. Da den erfindungsgemäßen Gläsern vorzugsweise kein Titanoxid zugesetzt wird, wird die Kristallisationsneigung vorteilhaft beeinflusst.

Weiter bevorzugt ist ein Glas mit folgender Zusammensetzung (in Gew.-%):

| | |
|---|---|
| SiO₂ | 35 bis 50 |
| B₂O₃ | 0,1 bis 6 |
| Al₂O₃ | 0,1 bis 7 |
| P₂O₅ | 0,1 bis 4 |
| Li₂O | 0 bis 6 |
| Na₂O | 2 bis 7 |
| K₂O | 2 bis 11 |
| MgO | 0 bis 5 |
| CaO | 0,5 bis 6,5 |
| BaO | 6 bis 14,5 |
| ZnO | 14 bis 25 |
| La₂O₃ | 0 bis 5 |
| ZrO₂ | 1 bis 10, |

ggf. Läutermittel in üblichen Mengen.

Weitere bevorzugte Zusammensetzungsbereiche sind in den Ansprüchen 3 bis 9 zusammengefasst.

Als Läutermittel, die meist mit weniger als 1 Gew.-%, bevorzugt mit maximal 0,5 Gew.-% zugesetzt werden, kommen z.B. Sb₂O₃, As₂O₃, SnO, NaCl, SO₄²⁻ und F⁻ in Frage.

Bevorzugte Gläser sind arsenfrei geläutert, für bestimmte qualitativ hochwertige Faserapplikationen kann jedoch auf die dämpfungsfreundliche Arsenläuterung nicht vollständig verzichtet werden.

Das Grundglassystem ist ein Boroaluminosilikat-Glassystem, welches aus sich heraus bereits die Basis für eine gute chemische Resistenz, exzellente Ionenaustauscheigenschaften und hohe Kristallisationsbeständigkeit mitbringt. Es setzt sich aus den Glasbildnern SiO₂ , B₂O₃ und Al₂O₃ mit einem Summengehalt von 35,2 bis 63 Gew.-% (bevorzugt 38,2 bis 57 Gew.-%, weiter bevorzugt 40,2 bis 57 Gew.-%, besonders bevorzugt 38,2 bis 55 Gew.-%) zusammen. Dabei bildet SiO₂ mit einem Gehalt von 35 bis 50 Gew.-% (bevorzugt 38 bis 47 Gew.-%, weiter bevorzugt 40 bis 47 Gew.-%, besonders bevorzugt 38 bis 45 Gew.-%) die Hauptbasis, der Al₂O₃ in Gehalten von 0,1 bis 7 Gew.-% (bevorzugt 0,1 bis 4 Gew.-%) und B₂O₃ in Gehalten von 0,1 bis 6 Gew.-% (bevorzugt 0,1 bis 5 Gew.-%) zugegeben wird.

Das sich aus den Einzelgehalten der Summenangabe ergebende Verhältnis der drei Glasbilder sollte vorzugsweise eingehalten werden. Da der Al₂O₃-Gehalt für die Erhöhung der chemischen Resistenz im Vergleich mit rein borsilikatischer Matrix verantwortlich zeichnet, ist ein Einsatz von mindestens 0,1 Gew.-%, vorzugsweise mindestens 0,5 Gew.-% Al₂O₃, obligatorisch. Eine Erhöhung des Al₂O₃-Gehalts über 7 Gew.-% hinaus würde dagegen zu einer Erhöhung des Gemengeschmelzpunktes und so zu einem erhöhten Produktionsaufwand mit entsprechend erhöhten Produktionskosten führen. Zudem würde die Länge des Glases steigen, was den Prinzipien der modernen Heißformgebungstechnologien widerspricht.

Eine Erhöhung des Gesamt-Glasbildnergehaltes über 63 Gew.-% hinaus, beispielsweise durch Erhöhung des SiO₂-Gehalts über 50 Gew.-% würde denselben negativen Effekt hervorrufen, ohne weitere Vorteile im Hinblick auf die chemische Resistenz zu bieten. Eine Verringerung des SiO₂-Gehalts unter 35 Gew.-% würde zu einer Verringerung der Kristallisationsstabilität der erfindungsgemäßen Gläser führen. Eine Eliminierung des Al₂O₃₋Gehalts zöge zudem eine Verschlechterung der Ionenaustauscheigenschaften nach sich, da ein Gehalt in den angegebenen Grenzen mindestens notwendig ist, um die Silikatstruktur des Materials mittels durch Al₂O₃ hervorgerufener Röhrenstrukturen aufzuweiten und damit die Voraussetzung für effektive Diffusions- und damit Ionenaustauschprozesse zu schaffen.

Dieser Effekt wird, wegen des (in Folge der Schmelzpunkterhöhung) nur in geringen Mengen eingesetzten Al₂O₃ durch den Zusatz von P₂O₅ (0,1 bis 4 Gew.-%, bevorzugt 0,5 bis 3 Gew.-%) unterstützt. Auch von P₂O₅ ist bekannt, dass es durch Ausbildung röhrenartiger Strukturelemente in silikatischer Matrix die Diffusionseigenschaften von Ionen und damit die Ionenaustauscheigenschaften verbessert. Eine Erhöhung des P₂O₅-Anteils über 4 Gew.-% hinaus würde dagegen die chemisch sehr resistente und wenig kristallisationsanfällige Matrix dieses Glases zu stark "aufweichen", so dass mit steigendem P₂O₅-Gehalt diese positiven Eigenschaften verloren gingen.

B₂O₃ wird als dritter Glasbildner zur Reduzierung der Viskosität und des Schmelzpunktes in geringen Mengen (0,1 bis 6 Gew.-%, bevorzugt 0,1 bis 5 Gew.-%) eingesetzt. Der Einsatz über die angegebenen Grenzen hinaus zur weiteren Reduzierung der Viskosität und des Schmelzpunktes des Glases, hin zu sehr kurzen Gläsern oder Gläsern mit sehr niedrigem Schmelzpunkt ist bei den hier angestrebten Applikationen in extrem dämpfungsarmen Systemen keine Alternative zu den typischen Flussmitteln (Alkalimetalloxide) und Netzwerkwandlern (Erdalkalimetalloxide), da B₂O₃ die Gläser aggressiver gegenüber den verwendeten Feuerfestmaterialien macht. Würde mit einem signifikant erhöhten BorGehalt in Quarz(gut)-Tiegeln geschmolzen, so würde die starke Korrosion zu einem erhöhten Eintrag von Silikat ins Glas, und damit, neben einer Veränderung der Glaseigenschaften, zu deutlich verkürzten Aggregatstandzeiten und damit zu erhöhten Produktionskosten führen. Würde hoch-borhaltig in Platinaggregaten geschmolzen, wäre der durch das B₂O₃ verursachte Platineintrag ins Glas so hoch, dass die angestrebten exzellenten Dämpfungswerte (besonders an der blauen Spektralkante) nicht mehr erreicht werden könnten. Aus dem gleichen Grund ist auch der Einsatz von Li₂O auf maximal 6 Gew.-% beschränkt. Zusätzlich ergeben sich zwischen B₂O₃ und Li₂O synergistische Effekte in Bezug auf den Feuerfestangriff der Gläser.

Insgesamt enthalten die erfindungsgemäßen Gläser 4 bis 24 Gew.-% Alkalimetalloxide, jedoch höchstens 6 Gew.-% Li₂O. Diese Gehalte garantieren die gute Schmelzbarkeit und geringe Viskosität der Gläser trotz des für die Kristallisationsstabilität und chemische Beständigkeit unerlässlich hohen Glasbildneranteils. Eine Erhöhung des Anteils an Lithiumoxid würde insbesondere in Verbindung mit dem Boratanteil die Feuerfestaggressivität in unerwünschter Weise steigern. Eine Verringerung des Alkalimetalloxid-Summenanteils würde zu einer Verschlechterung der Schmelzeigenschaften führen und zudem den Anteil an für den Ionenaustausch benötigten Ionen im Glas zu stark absenken, so dass die Anforderungen an Ionenaustauschintensität und Schichtstärke innerhalb eines wirtschaftlichen Prozesses nicht erfüllt werden könnten. Eine Erhöhung des Alkalimetalloxidanteils über 24 Gew.-% hinaus führt zu einem Absinken der chemischen Resistenz, einer Verschlechterung der Kristallisationsstabilität und einer starken Relaxationsneigung gegenüber dem spannungsaufbauenden Ionenaustausch, dem klassischen "Vorspannen". Die anteilige Zusammensetzung des Alkalimetalloxidgehalts beinhaltet vorzugsweise 2 bis 7 Gew.-% (bevorzugt 3 bis 6 Gew.-%) Na₂O, 2 bis 11 Gew.-% K₂O und optional bis zu 6 Gew.-% Li₂O. Dieses Verhältnis dient der Feineinstellung des Viskositäts-Temperaturprofils. Erhöhte Li₂O-Gehalte hätten neben den bereits oben diskutierten Nachteilen das Problem, die Gläser doch zu kurz für sinnvoll kontrollierbare Heißformgebungsprozesse zu machen. Eine Verschiebung des Na₂O-K₂O-Verhältnisses innerhalb der Grenzen kann dem Feintuning der Viskosität dienen. Eine Verschiebung außerhalb der Grenzen führt aus den heutzutage bekannten Viskositäts-Prozessfenstern (insbesondere hinsichtlich des Faserziehens) hinaus.

Das Gleiche gilt für das Verhältnis der obligatorisch eingesetzten Erdalkalimetalloxide (0 bis 12 Gew.-%, bevorzugt 0,5 bis 6,5 Gew.-% CaO, weiter bevorzugt 1 bis 5 Gew.-% CaO, besonders bevorzugt 2 bis 6,5 Gew.-% CaO, sowie BaO mit 6 bis 14,5 Gew.-%, bevorzugt 6 bis 12 Gew.-%, besonders bevorzugt 8 bis 14,5 Gew.-%, bei optionalem Ersatz von bis zu 5 Gew.-% CaO durch MgO (0 bis 5 Gew.-%)).

Diese Netzwerkwandler dienen nicht so sehr der Verringerung der Gesamtviskosität, sondern vielmehr der Einstellung der Kürze des Glases, die proportional mit ihrem Gehalt verstärkt wird. Dabei muss zusätzlich beachtet werden,dass der absolute Gehalt der Summe MgO + CaO + SrO deutlich unter dem BaO-Gehalt bleiben sollte, da ansonsten Diffusionssperrschichten in der Startphase eines potenziellen Ionenaustauschs gebildet werden könnten, die einen wirtschaftlich und applikatorisch sinnvollen Austausch verhindern.

Ein Überschreiten des maximalen Summenanteils der Erdalkalimetalloxide führt zu einer zu starken Aufweitung des stabilisierenden Netzwerks und somit zu starken Kristallisationstendenzen und zu geringer chemischer Resistenz der Gläser.

Die geringen bevorzugt eingesetzten Anteile an ZrO₂ (bis 10 Gew.-%, bevorzugt 1 bis 7 Gew.-%, weiter bevorzugt 3 bis 7 Gew. -%, ferner bevorzugt 2 bis 5 Gew.-%) und der optionale Einsatz von bis zu 5 Gew.-% (bevorzugt bis zu 3 Gew.-%, weiter bevorzugt bis zu 1,5 Gew.-%) La₂O₃ dienen zum einen der Einstellung der hier angestrebten optischen Lage von Doppelschwerkron-und Bariumleichtflint-Gläsern. Daneben unterstützen sie die Netzwerkbildner durch Erhöhung der chemischen Resistenz der erfindungsgemäßen Gläser. Eine Erhöhung über die angegebenen Maximalgrenzen hinaus würde dagegen, da beide Komponenten relative Eigenabsorptionen besitzen, zu Verlusten in der Transmission (Verlust der äußerst geringen Dämpfungseigenschaften), sowie zu erhöhter Kristallisationsneigung führen.

Die keimbildenden Eigenschaften des TiO₂ sind, neben seiner starken intrinsischen Absorption an der blauen Spektralkante (besonders in Verbindung mit Fe-Verunreinigungen), der Grund für die bevorzugte Freiheit des Glases von TiO₂.

Innerhalb des oben skizzierten Glassystems lassen sich zwei homogene, sich nicht überschneidende Zusammensetzungsfelder mit jeweils besonders hervorragenden Eigenschaften separieren. Bei vergleichbaren Gehalten an B₂O₃, Al₂O₃, P₂O₅, Na₂O, CaO, BaO und ZrO₂, sowie nur leicht veränderlichen SiO₂-Gehalten (40 bis 47 Gew.-% bzw. 38 bis 45 Gew.-%) unterscheiden sich diese beiden Familien deutlich in ihren Li₂O-, K₂O-, ZnO- und La₂O₃-Gehalten.

Die erste Zusammensetzungsfamilie ist Gegenstand der Ansprüche 5 und 6, während die zweite Zusammensetzungsfamilie Gegenstand der Ansprüche 7 und 8 ist.

Mit den Zusammensetzungen gemäß der Ansprüche 5 bzw. 6 lassen sich Brechungsindices von 1,55 ≤ n_{d} ≤ 1,61 bzw. 1,57 ≤ n_{d} ≤ 1,60 und Abbe-Werte von 50 ≤ ν_{d} ≤ 55 bzw. 50 ≤ ν_{d} ≤ 53 erzielen.

Mit den Zusammensetzungen gemäß der Ansprüche 7 und 8 lassen sich Brechungsindices von 1,55 ≤ N_{d} ≤ 1,60 bzw. 1,56 ≤ N_{d} ≤ 1,59 sowie Abbe-Werte von 51 ≤ ν_{d} ≤ 56 bzw. von 51 ≤ ν_{d} ≤ 54 erzielen.

Die erste dieser Familien ist arm an Li₂O bzw. frei von Li₂O (0 bis 2 Gew.-%, bevorzugt Li₂O-frei). Um nicht die durch das Li₂O mit hervorgerufenen guten Viskositätseigenschaften durch Elimination dieser Komponente zu verlieren, wird dieser Anteil durch K₂O ersetzt (> 6,5 bis 11 Gew.-%, bevorzugt (> 6,5 bis 10 Gew.-%), dessen Gehalt damit gegenüber dem der "hoch"-lithiumhaltigen Familie (Li-Gehalt > 2 bis 6 Gew.-%, K₂O-Gehalt 2 bis 6,5 Gew.-%, bevorzugt 3 bis 6,5 Gew.-%) erhöht ist. Auf diese Weise unterscheiden sich die beiden Familien durch die Stärke ihrer Feuerfestkorrosivität und ihre Kristallisationsneigung, die beide etwa proportional zum Li₂O-Gehalt sind, sowie den Gemengepreis, der tendenziell umgekehrt proportional zum Li₂O-Gehalt ist.

In dem Li₂O-armen bzw. -freien Zusammensetzungsfeld ist zudem der ZnO-Gehalt deutlich erhöht. Es werden hier bevorzugt 20 bis 25 Gew.-% eingesetzt, während die lithiumhaltige Glasfamilie nur bevorzugt 14 bis < 20 Gew.-%, bevorzugt 14 bis 19 Gew.-% ZnO enthält. Dafür wird der La₂O₃-Anteil gesenkt (0 bis 1,5 Gew.-% im Vergleich zu 1,5 bis 5 Gew.-% in dem lithiumhaltigen Zusammensetzungsbereich), bevorzugt sogar eliminiert. Diese beiden Unterschiede führen zu Differenzen der aus beiden Zusammensetzungsbereichen schmelzbaren Glastypen hinsichtlich der Kompatibilität mit den herkömmlichen Mantelgläsern und der Säurebeständigkeit des Kernglases.

Die lithiumarme/-freie Variante der erfindungsgemäßen Gläser besitzt durch geringe/keine Li₂O- und La₂O₃-Anteile und erhöhte K₂O-Anteile und vor allem ZnO-Anteile innerhalb des ohnehin schon optimierten, erfindungsgemäßen Eigenschaftsspektrums eine weiter verminderte Feuerfestkorrosivität, verbesserte Dämpfungseigenschaften, eine weiter verbesserte Kristallisationsstabilität, eine weiter erhöhte Säurebeständigkeit gegenüber der lithiumhaltigen Variante der erfindungsgemäßen Gläser. Dies geht allerdings im Hinblick auf geringeren Gemengepreis vor allem mit einen deutlich erhöhten Produktöffnungswinkel (2α) bei gleichen Brechwertlagen, also gleicher theoretischer numerischer Apertur, im Zusammenspiel mit den herkömmlichen Mantelgläsern einher. Dieser Effekt ist vermutlich auf Grenzflächenreaktionen zwischen Kern- und Mantelglas im Rahmen des Faserzugs zurückzuführen, die offensichtlich in der lithiumhaltigen (und damit ZnO-reduzierten) Variante der erfindungsgemäßen Gläser positiver ausfallen.

Neben zahlreichen anderen möglichen Applikationen lassen sich die erfindungsgemäßen Gläser besonders vorteilhaft zur Herstellung von optischen Stufenfasern als Kernglasmaterial einsetzen. Derartige optische Stufenfasern weisen an der Umfangswand des Kernglases vollständig anschließendes Mantelglas bevorzugt mit einer numerischen Apertur von 0,28 bis 0,70 auf.

Als auf das Kernglas abgestimmtes Mantelglas kann hierbei etwa ein Mantelglas mit folgender Zusammensetzung (in Gew.-%) verwendet werden:

| | |
|---|---|
| SiO₂ | 60 bis 72 |
| B₂O₃ | < 20 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F⁻ | < 1 |
| andere Oxide | 0 bis 3, |

wobei das Glas ggf. unter Zusatz von Läutermitteln in üblichen Mengen von vorzugsweise bis zu 1 Gew.-% erschmolzen ist.

Dabei werden bevorzugt außer zufälligen Verunreinigungen keine weiteren Oxide, sondern lediglich Läutermittel ggf. in einem Bereich von bis zu 1 Gew.-%, bevorzugt von bis zu 0,5 Gew.-%, verwendet.

Wiederum enthält das Mantelglas außer zufälligen Verunreinigungen kein Cs₂O.

In bevorzugter Weiterbildung der Erfindung beträgt die Summe der Komponenten Na₂O, Li₂O und K₂O im Mantelglas weniger als 3 Gew.-%. Die bevorzugten SiO₂-Gehalte des Mantelglases liegen bei etwa 66 bis 72 Gew.-%.

Die Erfindung wird nachfolgend an Hand von Ausführungsbeispielen näher erläutert.

### Ausführungsbeispiele

Die Tabellen 2 und 3 enthalten 14 Ausführungsbeispiele im bevorzugten Zusammensetzungsbereich. Die erfindungsgemäßen Gläser werden folgendermaßen hergestellt:

Die Rohstoffe für die Oxide, bevorzugt Carbonate, Nitrate und/oder Fluoride werden abgewogen, ein oder mehrere Läutermittel, wie z.B. Sb₂O₃, zugegeben und anschließend gut gemischt. Das Glasgemenge wird bei ca. 1350°C in einem kontinuierlichen Schmelzaggregat eingeschmolzen, danach geläutert (1400°C) und homogenisiert. Bei einer Gusstemperatur von etwa 1270°C wird das Glas gegossen (oder beispielsweise zu Faserkernstäben gezogen), gekühlt und zu den gewünschten Produkten weiterverarbeitet.

Die Eigenschaften des so erhaltenen Glases sind in der Tabelle 3, Beispiel 12 angegeben. Ein Schmelzbeispiel für 100 kg berechnetes Glas ist in Tabelle 1 angegeben.

**Tabelle 1:**

| **Oxid** | **Gew.-%** | **Rohstoff** | **Einwaage (kg)** |
|---|---|---|---|
| SiO₂ | 39 | SiO₂ | 38, 89 |
| B₂O₃ | 2 | H₃BO₃ | 3,54 |
| Al₂O₃ | 2 | Al(OH)₃ | 3 , 0 7 |
| P₂O₅ | 3 | P₂O₅ | 2,99 |
| Li₂O | 4 | Li₂CO₃ | 9, 87 |
| Na₂O | 2 | Na₂CO₃ | 3,42 |
| K₂O | 4 | K₂CO₃ | 5,88 |
| MgO | 3 | MgCO₃ | 6,80 |
| CaO | 3 | CaCO₃ | 5,30 |
| BaO | 0,3 | Ba(NO₃)₂ | 0,51 |
| BaO | 8,7 | BaCO₃ | 11,25 |
| ZnO | 24 | ZnO | 23,93 |
| La₂O₃ | 1 | La₂O₃ | 1,01 |
| ZrO₂ | 4 | ZrO₂ | 3,99 |
| Sb₂O₃ | 0,3 | Sb₂O₃ | 0,30 |
| Summe | 100,3 | | |

Zum Nachweis der Kompatibilität mit üblichen Mantelgläsern (Tabelle 4) wurden stichprobenartig Zusammensetzungen aus dem beanspruchten Kernglasbereich erschmolzen und mit eben diesen üblichen Mantelgläsern zu Fasern verzogen und begutachtet:

Beim Stab-Rohr-Verfahren werden ein zylindrischer Stab aus hoch brechendem Kernglas und das ihn umgebende Rohr aus niedrig brechendem Mantelglas in einem zylindrischen Ofen auf eine Temperatur entsprechend einer Zähigkeit von etwa 10⁴ bis 10³ dPas erhitzt. Kern- und Mantelglas verschmelzen dabei zu einer sogenannten Ziehzwiebel, aus der die optische Faser gezogen wird. Der Faserdurchmesser hängt dabei ab vom Verhältnis der Faserziehgeschwindigkeit zur Nachführgeschwindigkeit des Stab-Rohr-Systems und den Abmessungen von Kernstab und Rohr. Besondere Sorgfalt ist bei diesem Verfahren darauf zu legen, dass die Kernstaboberfläche und die Rohrinnenfläche extrem sauber und frei von jeglichem Schmutz und Partikeln sind, damit sie zu einer möglichst idealen, störungsfreien Grenzfläche der Faser verschmelzen können. Ebenso hat sich als vorteilhaft erwiesen, wenn Außendurchmesser des Kernstabs und Innendurchmesser des Rohrs sich nur um wenige Zehntel Millimeter unterscheiden, so dass sich eine gleichmäßige faltenfreie Ziehzwiebel ausbilden kann.

Die benötigten Kernglasstäbe unterschiedlicher Glaszusammensetzung wurden wie folgt hergestellt: Für jede gewählte Glaszusammensetzung wurde (aufgrund der geringen benötigten Glasmenge nur) eine 4-1-Schmelze (dämpfungsfreundliche Arsenläuterung) durchgeführt und in eine Barrenform (ca. 400 mm x 200 mm x 50 mm) gegossen. Hieraus wurden jeweils 2 bis 3 zylindrische Stäbe, ca. 300 mm lang und mit einem Durchmesser von 30 mm, mechanisch herausgearbeitet. Im letzten Bearbeitungsschritt erhielten die Stäbe eine feinoptische Politur, um die oben genannten Anforderungen an eine ideale Grenzfläche zu erfüllen. Insgesamt wurden 10 unterschiedliche erfindungsgemäße Kernglastypen geschmolzen und zu Kernglasstäben verarbeitet, zum Teil mit gleichen Glaszusammensetzungen wie die angegebenen Beispiele, zum Teil auch mit anderen Zusammensetzungen.

Die zum Faserziehen benötigten verschiedenen Mantelgläser lagen, wie oben erwähnt, in geeigneter Rohrform vor (Innendurchmesser - 31 mm, Außendurchmesser - 34 mm bis 35 mm). Als maschinenhergestellte, aus einer Pt-Düse gezogene Rohre, waren deren Abmessungen eng kalibriert, so dass keine zusätzliche mechanische Bearbeitung erforderlich war. Lediglich vor der Zusammenstellung zu einem Stab-Rohr-System, kurz vor dem Ziehvorgang, wurden Kernstab und Rohr in einem Ultraschall-Bad nach gängigem Verfahren sorgfältig gereinigt, um eine optimale Grenzfläche bei der Verschmelzung im Ziehprozess zu gewährleisten.

Das Ausziehen zur Faser erfolgte an einer Stab-Rohr-Ziehmaschine mit zylindrischem Ofen nach dem Stand der Technik. Es wurden ausschließlich Fasern mit 70 µm Durchmesser gezogen. Dies entspricht einem weltweit verbreiteten Standard, der sich für Mehrkomponentenfasern, die fast ausschließlich zu Bündelfasern verarbeitet werden, eingebürgert hat.

Die in Tabelle 4 aufgeführten Mantelglasbeispiele 4 und 5 verursachten durch ihre erhöhten Viskositäten und signifikante Länge gewisse Probleme im Faserziehprozess, da die Viskositäts-Temperaturprofile der erfindungsgemäßen Gläser, im Hinblick auf moderne Präzisions-(primär)Heißformgebungsprozesse, auf "kurze" Typen abgestimmt sind. Dadurch ergibt sich der erfindungsgemäß beanspruchte Mantelglaszusammensetzungsbereich bezüglich des SiO₂-Gehalts (60 bis 72 Gew.-%, bevorzugt 66 bis 72 Gew.-%).

Sämtliche mit den Mantelgläsern 1 bis 3 bestimmten numerischen Aperturen lagen im Bereich zwischen 0,28 bis 0,70. Naturgemäß ergaben sich bei Kombinationen von eher höher brechenden Kerngläsern mit eher tiefer brechenden Mantelgläsern die höheren Aperturwerte, während Kombinationen von eher tiefer brechenden Kerngläsern mit eher höher brechenden Mantelgläsern geringere Aperturwerte erfasst wurden.

Die Messung der Dämpfung erfolgte nach dem sogenannten Rückschneideverfahren (DIN 58 141 - 1). Dabei ergaben sich für Multikomponentengläser außerordentlich gute Werte im Bereich von < 1000 dB/km bei 452 nm, < 500 dB/km bei 554 nm und < 750 dB/km bei 642 nm.

Beispielsweise konnten an Varianten aus den besonders bevorzugten Kernglaszusammensetzungsbereichen Werte von <750 dB/km bei 452 nm, <350 dB/km bei 554 nm und <500 dB/km bei 642 nm erreicht werden.

**Tabelle 2: Schmelzbeispiele (in Gew.-%)**

| Beispiele | 1 | 2 | 3 | 4 | 5 | 6 | 7 |
|---|---|---|---|---|---|---|---|
| Si0₂ | 40 | 43 | 42 | 45 | 45 | 42 | 44 |
| B₂O₃ | 3 | 5 | 0,1 | 6 | 4 | 5 | 1 |
| Al₂O₃ | 2 | 0,5 | 3 | 4 | 0,1 | 1 | 2 |
| P₂O₅ | 1 | 0,5 | 3 | 4 | 0,1 | 3 | 2 |
| Li₂O | 5 | 3 | 5,9 | 5 | 2,3 | | |
| Na₂0 | 5 | 3 | 6 | 2 | 7 | 6 | 3 |
| K₂O | 4 | 6, 5 | 3 | 2 | 5 | 10 | 7 |
| MgO | | | 1 | | | | |
| CaO | 5 | 3,5 | 1 | 6 | 0,5 | 1 | 5 |
| BaO | 13 | 8 | 14 | 6 | 7 | 7 | 8 |
| ZnO | 17 | 19 | 16 | 14 | 18 | 20 | 25 |
| La₂O₃ | 2 | 3 | 3 | 5 | 4 | | |
| ZrO₂ | 3 | 5 | 2 | 1 | 7 | 5 | 3 |
| As₂O₃ | | 0,3 | | | 0,3 | | |
| Summe | 100 | 100,3 | 100 | 100 | 100,3 | 100 | 100 |
| n_{d} | 1,5824 | 1,5845 | 1,5679 | 1,5588 | 1,5838 | 1,5742 | 1,5869 |
| ν_{d} | 52,43 | 52,08 | 53,79 | 55,63 | 51,79 | 52,74 | 51,29 |
| P_{g.F} | 0,5536 | 0,5476 | 0,5546 | 0,5436 | 0,5476 | 0,5526 | 0,5536 |
| ΔP_{g.F}(10⁻⁴) | -20 | -90 | 10 | -70 | -90 | -30 | -40 |
| ρ (g/cm³) | 10,2 | 8,4 | 11,0 | 7,9 | 8,9 | 9,3 | 7,7 |
| Tg (°C) | 443 | 503 | 427 | 429 | 509 | 534 | 561 |
| α₂₀₋₃₀₀ (10⁻⁶ * K⁻¹) | 3,09 | 3,06 | 3,08 | 2,80 | 3,10 | 3,00 | 3,11 |

**Tabelle 3: Schmelzbeispiele (in Gew.-%)**

| Beispiele | 8 | 9 | 10 | 11 | 12 | 13 | 14 |
|---|---|---|---|---|---|---|---|
| Si0₂ | 47 | 40 | 41 | 38 | 39 | 35 | 50 |
| B₂O₃ | 0,1 | 5 | 6 | 0,2 | 2 | 3 | 1 |
| Al₂O₃ | 0,1 | 3 | 0,5 | 0,4 | 2 | 7 | 1 |
| P₂O₅ | 0,5 | 4 | 0,5 | 0,4 | 3 | 2 | 0,1 |
| Li₂0 | | 2 | 0,5 | 1 | 4 | 6 | 3 |
| Na₂O | 3,3 | 2 | 7 | 4 | 2 | 4 | 2 |
| K₂O | 7 | 7 | 11 | 9 | 4 | 2 | 2 |
| MgO | | | | | 3 | | |
| CaO | 1 | 0,5 | 4 | 6,5 | 3 | 2 | 1 |
| BaO | 12 | 14 | 6 | 14,5 | 9 | 6 | 9,9 |
| ZnO | 22 | 20 | 21 | 21 | 24 | 22 | 23 |
| La₂O₃ | | 0,5 | 1,5 | 2 | 1 | 1 | 5 |
| ZrO₂ | 7 | 2 | 1 | 3 | 4 | 10 | 2 |
| As₂O₃ | | 0,3 | | | 0,3 | | |
| Summe | 100 | 100,3 | 100 | 100 | 100,3 | 100 | 100 |
| n_{d} | 1,5981 | 1,5617 | 1,5592 | 1,6003 | 1,5948 | 1,6102 | 1,5739 |
| v_{d} | 50,13 | 54,42 | 54,23 | 49,7 | 50,91 | 49,76 | 53,03 |
| P_{g,F} | 0,5506 | 0,5476 | 0,5556 | 0,5596 | 0,5516 | 0,5556 | 0,5446 |
| ΔP_{g.F}(10⁻⁴) | -100 | -50 | 20 | -10 | -70 | -50 | -110 |
| ρ(g/cm³) | 7,8 | 8,5 | 9,9 | 9,4 | 8,6 | 8,9 | 7,0 |
| Tg (°C) | 604 | 531 | 486 | 533 | 491 | 456 | 541 |
| α₂₀₋₃₀₀ (10⁻⁶ * K⁻¹) | 3,24 | 3,09 | 2,91 | 3,26 | 3,17 | 3,15 | 3,15 |

**Tabelle 4 Mantelglasvarianten**

| Gew.-% | Beispiel | | | | |
|---|---|---|---|---|---|
| | 1 | 2 | 3 | 4 | 5 |
| SiO₂ | 69 | 70 | 68 | 81 | 75 |
| B₂O₃ | 1,9 | 1 | 3 | 12 | 10 |
| Al₂O₃ | 3 | 4 | 8 | 2,5 | 5 |
| Na₂O | 1 | 13 | 15 | 3,5 | 7 |
| K₂O | 8 | 2 , 3 | | 1 | 0,1 |
| Li₂O | | | 1 | | |
| MgO | | 2,5 | | | |
| BaO | | 2 | | | 0, 6 |
| CaO | | 5 | 3 | | 1,4 |
| ZnO | | | 1,5 | | |
| F | | 0,2 | 0,5 | | 0,2 |

## Patentansprüche

1. Boroaluminosilikatglas, das zumindest folgende Bestandteile enthält (in Gew.-%):
| | |
|---|---|
| SiO₂ | 35 bis 50 |
| B₂O₃ | 0,1 bis 7 |
| Al₂O₃ | 0,1 bis 7 |
| P₂O₅ | 0,1 bis 4 |
| R₂O | 4 bis 24 |
| RO | 0 bis 12 |
| BaO | 6 bis 14,5 |
| ZnO | 14 bis 25 |
| La₂O₃ | 0 bis 5 |
| ZrO₂ | 0 bis 10, |
wobei R₂O ein Alkalioxid ist, RO ein Erdalkalioxid außer BaO ist, wobei der Anteil von Li₂O maximal 6 Gew.-% beträgt, wobei das Glas außer zufälligen Verunreinigungen kein GeO₂, SnO, SnO₂ oder Sb₂O₃, AgO und keine seltenen Erden enthält, und wobei das Glas ggf. unter Zusatz von Läutermitteln in üblichen Mengen von vorzugsweise bis zu 1 Gew.-% erschmolzen ist.

2. Glas nach Anspruch 1, mit folgender Zusammmensetzung (in Gew.-%):
| | |
|---|---|
| SiO₂ | 35 bis 50 |
| B₂O₃ | 0,1 bis 7 |
| Al₂O₃ | 0,1 bis 7 |
| P₂O₅ | 0,1 bis 4 |
| Li₂O | 0 bis 6 |
| Na₂O | 2 bis 7 |
| K₂O | 2 bis 11 |
| MgO | 0 bis 5 |
| CaO | 0,5 bis 6,5 |
| BaO | 6 bis 14,5 |
| ZnO | 14 bis 25 |
| La₂O₃ | 0 bis 5 |
| ZrO₂ | 1 bis 10 |
Läutermittel in üblichen Mengen.

3. Glas nach Anspruch 1 oder 2, bei dem der Gewichtsanteil an RO kleiner als der Anteil an BaO ist.

4. Glas nach Anspruch 1, 2 oder 3, das zumindest folgende Bestandteile enthält (in Gew.-%):
| | |
|---|---|
| SiO₂ | 38 bis 47 |
| B₂O₃ | 0,1 bis 6 |
| Al₂O₃ | 0, 1 bis 4 |
| P₂O₅ | 0,1 bis 4 |
| Li₂O | 0 bis 6 |
| Na₂O | 2 bis 7 |
| K₂O | 2 bis 11 |
| MgO | 0 bis 5 |
| CaO | 0,5 bis 6,5 |
| BaO | 6 bis 14,5 |
| ZnO | 14 bis 25 |
| La₂O₃ | 0 bis 5 |
| ZrO₂ | 1 bis 7. |

5. Glas nach Anspruch 4, das zumindest folgende Bestandteile enthält (in Gew.-%):
| | |
|---|---|
| SiO₂ | 40 bis 47 |
| B₂O₃ | 0,1 bis 6 |
| Al₂O₃ | 0,1 bis 4 |
| P₂O₅ | 0,1 bis 4 |
| Li₂O | 0 bis 2 |
| Na₂O | 2 bis 7 |
| K₂O | >6,5 bis 11 |
| MgO | 0 bis 5 |
| CaO | 0,5 bis 6 |
| BaO | 6 bis 14 |
| ZnO | 20 bis 25 |
| La₂O₃ | 0 bis 1,5 |
| ZrO₂ | 1 bis 7. |

6. Glas nach Anspruch 5 mit folgender Zusammensetzung (in Gew.-%):
| | |
|---|---|
| SiO₂ | 42 bis 47 |
| B₂O₃ | 0,1 bis 5 |
| Al₂O₃ | 0,1 bis 2 |
| P₂O₅ | 0,5 bis 3 |
| Na₂O | 3 bis 6 |
| K₂O | >6, 5 bis 10 |
| CaO | 1 bis 5 |
| BaO | 6 bis 12 |
| ZnO | 20 bis 25 |
| ZrO₂ | 3 bis 7, |
Läutermittel in üblichen Mengen.

7. Glas nach einem der Ansprüche 1 bis 3, das zumindest folgende Bestandteile enthält (in Gew.-%):
| | |
|---|---|
| SiO₂ | 38 bis 45 |
| B₂O₃ | 0,1 bis 6 |
| Al₂O₃ | 0,1 bis 4 |
| P₂O₅ | 0,1 bis 4 |
| Li₂O | >2 bis 6 |
| Na₂O | 2 bis 7 |
| K₂O | 2 bis 6,5 |
| MgO | 0 bis 5 |
| CaO | 0,5 bis 6,5 |
| BaO | 6 bis 14,5 |
| ZnO | 14 bis <20 |
| La₂O₃ | >1,5 bis 5 |
| ZrO₂ | 1 bis 7. |

8. Glas nach Anspruch 7, mit folgender Zusammensetzung (in Gew.-%):
| | |
|---|---|
| SiO₂ | 38 bis 43 |
| B₂O₃ | 0,1 bis 5 |
| Al₂O₃ | 0,5 bis 3 |
| P₂O₅ | 0,5 bis 3 |
| Li₂O | >2 bis 6 |
| Na₂O | 3 bis 6 |
| K₂O | 3 bis 6,5 |
| CaO | 2 bis 6,5 |
| BaO | 8 bis 14,5 |
| ZnO | 14 bis 19 |
| La₂O₃ | >1,5 bis 3 |
| ZrO₂ | 2 bis 5, |
Läutermittel in üblichen Mengen.

9. Glas nach einem der vorhergehenden Ansprüche, bei dem als Läutermittel mindestens eine der aus Sb₂O₃, As₂O₃ SnO, NaCl, SO₄²⁻ und F⁻ gebildeten Gruppe ausgewählte Komponente mit einem Anteil von jeweils bis zu 1 Gew.-% beim Schmelzen zugesetzt ist.

10. Glas nach einem der vorhergehenden Ansprüche, das einen. Brechungsindex n_{d} von 1,54 ≤ n_{d} ≤ 1,62 und einen Abbewert von 48 ≤ ν_{d} ≤ 57 aufweist.

11. Verwendung eines Glases nach einem der vorhergehenden Ansprüche als Glas für optische Anwendungen, insbesondere für mindestens eines der Applikationsfelder Abbildung, Projektion, Telekommunikation, optische Nachrichtentechnik, Lasertechnologie.

12. Optische Stufenfaser aus Mehrkomponentengläsern mit einem Kernglas nach einem der Ansprüche 1 bis 10 und mit einem vollständig an seiner Umfangswand anschließenden Mantelglas mit einer numerischen Apertur von 0,28 bis 0,70.

13. Optische Stufenfaser nach Anspruch 12, bei der das Mantelglas folgende Zusammensetzung aufweist (in Gew.-%):
| | |
|---|---|
| SiO₂ | 60 bis 72 |
| B₂O₃ | < 20 |
| Al₂O₃ | < 10 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F⁻ | < 1 |
andere Oxide 0 bis 3,
wobei das Glas ggf. unter Zusatz von Läutermitteln in üblichen Mengen von vorzugsweise bis zu 1 Gew.-% erschmolzen ist.

14. Optische Stufenfaser nach Anspruch 13, bei der das Mantelglas folgende Zusammensetzung aufweist (in Gew.-%):
| | |
|---|---|
| SiO₂ | 60 bis 72 |
| B₂O₃ | < 20 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F⁻ | < 1. |

15. Optische Stufenfaser nach einem der Ansprüche 12 bis 14, bei der das Mantelglas außer zufälligen Verunreinigungen kein Cs₂O enthält..

16. Optische Stufenfaser nach einem der Ansprüche 12 bis 15, bei der im Mantelglas die Summe der Komponenten Na₂O, Li₂O und K₂O < 3 Gew.-% ist.

17. Optische Stufenfaser nach einem der Ansprüche 12 bis 16, bei der das Mantelglas einen SiO₂-Gehalt von 66 bis 72 Gew.-% aufweist.

18. Verwendung einer optischen Stufenfaser nach einem der Ansprüche 12 bis 17 für mindestens eines der Folgenden: zur Übertragung von Licht, in einem Faserbündel, zur Datenübertragung, zur Datenübertragung in Fahrzeugen, zur Fahrzeugbeleuchtung, als Verkehrszeichengeber, für die Bahnsignalisation, als alphanumerisches Display, zur Beleuchtung in Kaltlichtquellen, zur Beleuchtung in der medizinischen und technischen Endoskopie, insbesondere in der Operationsmikroskopie.

## Claims

1. A boron aluminosilicate glass comprising (in wt.-%):
| | |
|---|---|
| SiO₂ | 35 to 50 |
| B₂O₃ | 0.1 to 7 |
| Al₂O₃ | 0.1 to 7 |
| P₂O₅ | 0.1 to 4 |
| R₂O | 4 to 24 |
| RO | 0 to 12 |
| BaO | 6 to 14.5 |
| ZnO | 14 to 25 |
| La₂O₃ | 0 to 5 |
| ZrO₂ | 0 to 10, |
wherein R₂O is an alkali oxide, RO is an alkaline earth oxide apart from BaO, wherein the amount of Li₂O is 6 wt.-% maximum, wherein the glass, apart from any unintended contaminants, does not contain any GeO₂, SnO, SnO₂, Sb₂O₃, AgO or any rare earth metals, and wherein the glass may be molten by adding refining agents in common amounts of preferably up to 1 wt.-%.

2. The boron aluminosilicate glass of claim 1 comprising (in wt.-%):
| | |
|---|---|
| SiO₂ | 35 to 50 |
| B₂O₃ | 0.1 to 7 |
| Al₂O₃ | 0.1 to 7 |
| P₂O₅ | 0.1 to 4 |
| Li₂O | 0 to 6 |
| Na₂O | 2 to 7 |
| K₂O | 2 to 11 |
| MgO | 0 to 5 |
| CaO | 0.5 to 6.5 |
| BaO | 6 to 14.5 |
| ZnO | 14 to 25 |
| La₂O₃ | 0 to 5 |
| ZrO₂ | 1 to 10 |
refining agents in common amounts.

3. The boron aluminosilicate glass of claim 1 or 2, wherein the portion of RO in the total weight is smaller than the portion of BaO.

4. The boron aluminosilicate glass of any of claims 1, 2 or 3, comprising at least the following components (in wt.-%):
| | |
|---|---|
| SiO₂ | 38 to 47 |
| B₂O₃ | 0.1 to 6 |
| Al₂O₃ | 0.1 to 4 |
| P₂O₅ | 0.1 to 4 |
| Li₂O | 0 to 6 |
| Na₂O | 2 to 7 |
| K₂O | 2 to 11 |
| MgO | 0 to 5 |
| CaO | 0.5 to 6.5 |
| BaO | 6 to 14.5 |
| ZnO | 14 to 25 |
| La₂O₃ | 0 to 5 |
| ZrO₂ | 1 to 7. |

5. The boron aluminosilicate glass of claim 4, comprising at least the following components (in wt.-%):
| | |
|---|---|
| SiO₂ | 40 to 47 |
| B₂O₃ | 0.1 to 6 |
| Al₂O₃ | 0.1 to 4 |
| P₂O₅ | 0. to 4 |
| Li₂O | 0 to 2 |
| Na₂O | 2 to 7 |
| K₂O | >6.5 to 11 |
| MgO | 0 to 5 |
| CaO | 0. to 6 |
| BaO | 6 to 14 |
| ZnO | 20 to 25 |
| La₂O₃ | 0 to 1.5 |
| ZrO₂ | 1 to 7. |

6. The boron aluminosilicate glass of claim 5 comprising in wt.-%):
| | |
|---|---|
| SiO₂ | 42 to 47 |
| B₂O₃ | 0.1 to 5 |
| Al₂O₃ | 0.1 to 2 |
| P₂O₅ | 0.5 to 3 |
| Na₂O | 3 to 6 |
| K₂O | >6.5 to 10 |
| CaO | 1 to 5 |
| BaO | 6 to 12 |
| ZnO | 20 to 25 |
| ZrO₂ | 3 to 7, |
refining agents in common amounts.

7. The boron aluminosilicate glass of any of claims 1 to 3, comprising at least the following components (in wt.-%):
| | |
|---|---|
| SiO₂ | 38 to 45 |
| B₂O₃ | 0.1 to 6 |
| Al₂O₃ | 0.1 to 4 |
| P₂O₅ | 0.1 to 4 |
| Li₂O | >2 to 6 |
| Na₂O | 2 to 7 |
| K₂O | 2 to 6.5 |
| MgO | 0 to 5 |
| CaO | 0.5 to 6.5 |
| BaO | 6 to 14.5 |
| ZnO | 14 to <20 |
| La₂O₃ | >1.5 to 5 |
| ZrO₂ | 1 to 7. |

8. The boron aluminosilicate glass of claim 7, comprising the following components (in wt.-%):
| | |
|---|---|
| SiO₂ | 38 to 43 |
| B₂O₃ | 0.1 to 5 |
| Al₂O₃ | 0.5 to 3 |
| P₂O₅ | 0.5 to 3 |
| Li₂O | >2 to 6 |
| Na₂O | 3 to 6 |
| K₂O | 3 to 6.5 |
| CaO | 2 to 6.5 |
| BaO | 8 to 14.5 |
| ZnO | 14 to 19 |
| La₂O₃ | >1.5 to 3 |
| ZrO₂ | 2 to 5, |
refining agents in common amounts.

9. The boron aluminosilicate glass of any of the preceding claims, wherein a maximum amount of 1 wt.-% of a refining agent is added during melting, the refining agent comprising at least one component selected from the group formed by Sb₂O₃, As₂O₃, SnO, NaCl, SO₄²⁻ and F⁻.

10. The boron aluminosilicate glass of any of the preceding claims having a refractive index n_{d} of 1.54 ≤ n_{d} ≤ 1.62 and an Abbe number of 48 ≤ ν_{d} ≤ 57.

11. Use of a glass of any of the preceding claims for a glass for optical applications, in particular for at least one of the following fields of application: imaging, projection, telecommunication, optical communication engineering, laser technology.

12. An optical stepped-index fiber comprising multi-component glasses and having a core glass according to any of claims 1 to 10, and further comprising a cladding glass fully enclosing the outer wall of said core glass and having a numerical aperture of 0.28 to 0.70.

13. The optical stepped-index fiber of claim 12, wherein said cladding glass comprises (in wt.-%):
| | |
|---|---|
| SiO₂ | 60 to 72 |
| B₂O₃ | < 20 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F⁻ | < 1 |
other oxides 0 to 3,
wherein the cladding glass may be molten by adding refining agents in common amounts of preferably up to 1 wt.-%.

14. The optical stepped-index fiber of claim 13, wherein said cladding glass comprises (in wt.-%):
| | |
|---|---|
| SiO₂ | 60 to 72 |
| B₂O₃ | < 20 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F⁻ | < 1. |

15. The optical stepped-index fiber of any of claims 12 to 14, wherein said cladding glass, apart from any unintended contaminants, does not contain any Cs₂O.

16. The optical stepped-index fiber of any of claims 12 to 15, wherein in said cladding glass the sum of the components Na₂O, Li₂O and K₂O is smaller than 3 wt.-%.

17. The optical stepped-index fiber of any of claims 12 to 16 wherein in said cladding glass the content of SiO₂ is between 66 and 72 wt.-%.

18. Use of the optical stepped-index fiber of any of claims 12 to 17 for at least one of the following applications: the transmission of light, in a fiber bundle, for data communication, for data communication in vehicles, for vehicle illumination, for traffic light character generators, for railway signalling, as an alphanumerical display, for the illumination in cold light sources, for the illumination in the medical and technical endoscopy, in particular in surgical microscopy.

## Revendications

1. Verre boroaluminosilicate, qui contient au moins les constituants suivants (en % en poids) :
| | |
|---|---|
| SiO₂ | 35 à 50 |
| B₂O₃ | 0,1 à 7 |
| Al₂O₃ | 0,1 à 7 |
| P₂O₅ | 0,1 à 4 |
| R₂O | 4 à 24 |
| RO | 0 à 12 |
| BaO | 6 à 14,5 |
| ZnO | 14 à 25 |
| La₂O₃ | 0 à 5 |
| ZrO₂ | 0 à 10, |
où R₂O est un oxyde alcalin , Ro est un oxyde alcalino-terreux sauf BaO, où la quantité de Li₂O s'élève à 6% en poids au maximum, où le verre ne contient, outre les impuretés fortuites, pas de GeO₂, SnO, SnO₂ ou Sb₂O₃, AgO et aucune terre rare, et où le verre est fondu, le cas échéant avec addition d'un agent d'affinage en les quantités usuelles de, de préférence, jusqu'à 1 % en poids.

2. Verre selon la revendication 1, avec la composition suivante (en % en poids) :
| | |
|---|---|
| SiO₂ | 35 à 50 |
| B₂O₃ | 0,1 à 7 |
| Al₂O₃ | 0,1 à 7 |
| P₂O₅ | 0,1 à 4 |
| Li₂O | 0 à 6 |
| Na₂O | 2 à 7 |
| K₂O | 2 à 11 |
| MgO | 0 à 5 |
| CaO | 0,5 à 6,5 |
| BaO | 6 à 14,5 |
| ZnO | 14 à 25 |
| La₂O₃ | 0 à 5 |
| ZrO₂ | 1 à 10, |
agent d'affinage en les quantités usuelles.

3. Verre selon la revendication 1 ou 2, dans lequel la quantité pondérale en RO est inférieure à la quantité en BaO.

4. Verre selon la revendication 1, 2 ou 3, qui contient au moins les constituants suivants (en % en poids) :
| | |
|---|---|
| SiO₂ | 38 à 47 |
| B₂O₃ | 0,1 à 6 |
| Al₂O₃ | 0,1 à 4 |
| P₂O₅ | 0,1 à 4 |
| Li₂O | 0 à 6 |
| Na₂O | 2 à 7 |
| K₂O | 2 à 11 |
| MgO | 0 à 5 |
| CaO | 0,5 à 6,5 |
| BaO | 6 à 14,5 |
| ZnO | 14 à 25 |
| La₂O₃ | 0 à 5 |
| ZrO₂ | 1 à 7. |

5. Verre selon la revendication 4, qui contient au moins les constituants suivants (en % en poids) :
| | |
|---|---|
| SiO₂ | 40 à 47 |
| B₂O₃ | 0,1 à 6 |
| Al₂O₃ | 0,1 à 4 |
| P₂O₅ | 0,1 à 4 |
| Li₂O | 0 à 2 |
| Na₂O | 2 à 7 |
| K₂O | > 6, 5 à 11 |
| MgO | 0 à 5 |
| CaO | 0, 5 à 6 |
| BaO | 6 à 14 |
| ZnO | 20 à 25 |
| La₂O₃ | 0 à 1,5 |
| ZrO₂ | 1 à 7. |

6. Verre selon la revendication 5, avec la composition suivante (en % en poids) :
| | |
|---|---|
| SiO₂ | 42 à 47 |
| B₂O₃ | 0,1 à 5 |
| Al₂O₃ | 0,1 à 2 |
| P₂O₅ | 0,5 à 3 |
| Na₂O | 3 à 6 |
| K₂O | >6,5 à 10 |
| CaO | 1 à 5 |
| BaO | 6 à 12 |
| ZnO | 20 à 25 |
| ZrO₂ | 3 à 7, |
Agent d'affinage en les quantités usuelles.

7. Verre selon l'une des revendications 1 à 3, qui contient au moins les constituants suivants (en % en poids) :
| | |
|---|---|
| SiO₂ | 38 à 45 |
| B₂O₃ | 0,1 à 6 |
| Al₂O₃ | 0,1 à 4 |
| P₂O₅ | 0,1 à 4 |
| Li₂O | > 2 à 6 |
| Na₂O | 2 à 7 |
| K₂O | 2 à 6,5 |
| MgO | 0 à 5 |
| CaO | 0,5 à 6,5 |
| BaO | 6 à 14,5 |
| ZnO | 14 à <20 |
| La₂O₃ | >1,5 à 5 |
| ZrO₂ | 1 à 7. |

8. Verre selon la revendication 7, avec la composition suivante (en % en poids) :
| | |
|---|---|
| SiO₂ | 38 à 43 |
| B₂O₃ | 0,1 à 5 |
| Al₂O₃ | 0,5 à 3 |
| P₂O₅ | 0,5 à 3 |
| Li₂O | > 2 à 6 |
| Na₂O | 3 à 6 |
| K₂O | 3 à 6,5 |
| CaO | 2 à 6,5 |
| BaO | 8 à 14,5 |
| ZnO | 14 à 19 |
| La₂O₃ | > 1,5 à 3 |
| ZrO₂ | 2 à 5, |
Agent d'affinage en les quantités usuelles.

9. Verre selon l'une des revendications précédentes, auquel on ajoute à la masse fondue, comme agent d'affinage, au moins un composant choisi parmi le groupe formé par Sb₂O₃, As₂O₃, SnO, NaCl, SO₄²⁻ et F, chaque fois en une quantité jusqu'à 1 % en poids.

10. Verre selon l'une des revendications précédentes, qui présente un indice de réfraction n_{d} de 1,54 ≤ n_{d} ≤ 1,62 et une valeur d'Abbe de 48 ≤ v_{d} ≤ 57.

11. Utilisation d'un verre selon l'une des revendications précédentes, comme verre pour utilisations optiques, en particulier pour au moins un des domaines d'application, à savoir représentation, projection, télécommunication, technique des télécommunications optiques, technologie laser.

12. Fibre optique à échelon d'indice en verre multicomposant avec un verre central selon l'une des revendications 1 à 10 et un verre d'enveloppe entourant complètement sa périphérie, avec une ouverture numérique de 0,28 à 0,70.

13. Fibre optique à échelon d'indice selon la revendication 12, dans laquelle le verre d'enveloppe présente la composition suivante (en % en poids) :
| | |
|---|---|
| SiO₂ | 60 à 72 |
| B₂O₃ | < 20 |
| Al₂O₃ | <10 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F⁻ | < 1 |
| Autres oxydes | 0 à 3, |
où le verre est fondu, le cas échéant avec addition d'un agent d'affinage en les quantités usuelles de, de préférence, jusqu'à 1 % en poids.

14. Fibre optique à échelon d'indice selon la revendication 13, dans laquelle le verre d'enveloppe présente la composition suivante (en % en poids) :
| | |
|---|---|
| SiO₂ | 60 à 72 |
| B₂O₃ | <20 |
| Na₂O | < 18 |
| K₂O | < 15 |
| Li₂O | < 2 |
| MgO | < 3 |
| BaO | < 3 |
| SrO | < 4 |
| CaO | <6 |
| ZnO | < 3 |
| F⁻ | <1. |

15. Fibre optique à échelon d'indice selon l'une des revendications 12 à 14, pour laquelle le verre d'enveloppe ne contient, outre les impuretés fortuites, pas de Cs₂O.

16. Fibre optique à échelon d'indice selon l'une des revendications 12 à 15, pour laquelle dans le verre d'enveloppe, la somme des composants Na₂O, Li₂O et K₂O est < 3% en poids.

17. Fibre optique à échelon d'indice selon l'une des revendications 12 à 16, pour laquelle le verre d'enveloppe présente une teneur en SiO₂ de 66 à 72% en poids.

18. Utilisation d'une fibre optique à échelon d'indice selon l'une des revendications 12 à 17, pour au moins une des applications suivantes : pour le transfert de lumière, dans un faisceau de fibres, pour le transfert de données, pour le transfert de données dans des véhicules, pour l'illumination des véhicules, comme panneau de signalisation, pour la signalisation ferroviaire, comme affichage alphanumérique, pour l'illumination avec source froide de lumière, pour l'illumination en endoscopie médicale et technique, en particulier en microscopie opératoire.
